# EUROPÄISCHE PATENTANMELDUNG

(11) **EP 0 847 798 A1**
(43) Veröffentlichungstag der Anmeldung: **17.06.1998**
(21) Anmeldenummer: 96119839.7
(22) Anmeldetag: 11.12.1996
(51) Int. Cl.: B01F 3/04

(54) **Verfahren zum Einleiten eines Gases in eine Flüssigkeit und dafür geeignete Vorrichtungen**

(71) Anmelder: Esser, Paul, 53489 Sinzig-Westum (DE)
(72) Erfinder: Esser, Paul, 53489 Sinzig-Westum (DE)
(74) Vertreter: KEIL & SCHAAFHAUSEN Patentanwälte

(57) **Zusammenfassung**

Verfahren und Vorrichtungen zum Einleiten eines Gases in eine Flüssigkeit, bei dem ein unter Atmosphärendruck stehendes Gas durch ein über die Flüssigkeitsoberfläche hinausragendes Saugrohr mittels einer unter der Flüssigkeitsoberfläche aufgestellten, luftfördernden Turbine angesaugt und unter Anwendung eines Druckes, der im Gleichgewicht mit oder nur geringfügig höher als der hydrostatische Druck an der Grenzfläche Gas/Flüssigkeit ist, durch die Turbine rotierend in der Flüssigkeit verteilt wird.

## Beschreibung

Gegenstand der Erfindung ist ein Verfahren zum Einleiten eines Gases in eine Flüssigkeit und dafür geeignete Vorrichtungen, wobei ein unter Atmosphärendruck stehendes Gas durch eine unter der Flüssigkeitsoberflache aufgestellte, luftfördernde Turbine angesaugt und unter Anwendung eines möglichst geringen Druckes rotierend in der Flüssigkeit verteilt wird.

Verfahren zum Einbringen von Gasen in Flüssigkeiten haben auf vielen Gebieten der Technik große Bedeutung erlangt. Zahlreiche Verfahren sind beispielsweise zur Belüftung oder Sauerstoffanreicherung von Abwässern in den letzten Jahren vorgeschlagen worden, um dadurch die Voraussetzungen für einen biologischen Abbau von Verunreinigungen zu schaffen. Aber auch das Einleiten von Heißluft zum Zwecke der Erwärmung oder das Einleiten von Kaltluft zum Zwecke der Abkühlung von Flüssigkeiten, insbesondere von Wasser, erfordern spezielle Technologien, wenn ein hoher Wirkungsgrad und gleichzeitig ein möglichst geringer Energie- und Kostenaufwand als Bedingungen vorgegeben sind. Schließlich ist auch die Befreiung der Luft und anderer Gase von Schwebstoffen, Geruchsanteilen und anderen Verunreinigungen durch Einleiten in Flüssigkeiten möglich, sofern hierfür eine effektive Technologie zur Verfügung steht.

Die besonders auf dem Gebiet der Abwasseraufbereitung bereits entwickelten Verfahren mit den dazugehörigen Belüftungsvorrichtungen sind jedoch nur dann brauchbar, wenn sie zwei Grundvoraussetzungen erfüllen:
- Sie müssen gewährleisten, daß eine für die biologische Aktivität optimale Sauerstoff-Konzentration erreicht wird;
- Sie müssen sicherstellen, daß die flüssige Phase gleichmäßig durchmischt wird, um eine möglichst vollständige Sauerstoffaufnahme aus dem eingeleiteten Gas zu erreichen.

Außerdem sollen die Investitions-, die Betriebs- und die Wartungskosten von Belüftersystemen so gering wie möglich sein, um die Industrie, aber auch Städte und Gemeinden in den Stand zu setzen, die Anforderungen des Umweltschutzes wirtschaftlich erfüllen zu können.

Die bisher angewandten Belüftungsverfahren und die dafür bestimmten Vorrichtungen können diese Bedingungen häufig nur teilweise oder unzureichend erfüllen, weil die wissenschaftlichen Voraussetzungen für eine wirkungsvolle Aufnahme eines Gases wie Sauerstoff in einer Flüssigkeit wie Wasser nicht voll berücksichtigt werden.

Ein entscheidender Mangel der bisherigen Belüftungsverfahren ist darin zu sehen, daß man zur Erreichung einer schnellen und hohen Gassättigung möglichst große Mengen stark komprimierten Gases in die Flüssigkeit einleitet. Obwohl schon vielfältige Maßnahmen vorgeschlagen wurden, um aus dem komprimierten Gas möglichst feine Bläschen zu bilden, die durch ihre große Oberfläche die Absorption des Gases in der Flüssigkeit erhöhen sollen, kann die geringe Wirksamkeit dieser Maßnahmen sofort daran erkannt werden, daß ein Großteil des eingeleiteten Gases in Form von Luftblasen schnell wieder an die Oberfläche der Flüssigkeit steigt. Die weitaus überwiegende Menge des mit erheblichem Energieaufwand in die Flüssigkeit hineingedrückten Gases kommt also überhaupt nicht zur Wirkung, sondern verläßt die Flüssigkeit wieder, ohne absorbiert worden zu sein.

Die wichtigste Voraussetzung für eine weitgehende Absorption eines Gases in einer Flüssigkeit besteht darin, dem Gasbläschen ausreichend Zeit für einen innigen Kontakt mit der Flüssigkeit zu geben. Es muß dafür Sorge getragen werden, daß das Gasbläschen nicht etwa explosionsartig an die Flüssigkeitsoberfläche steigt, sondern möglichst lange in der Flüssigkeit schwebt, damit genügend Gelegenheit für einen Stoffaustausch zwischen Gas- und Flüssigkeitsphase besteht.

Diese Bedingung ist beim Einleiten eines unter hohem Druck stehenden, komprimierten Gases niemals gegeben. Denn das aus einem komprimierten Gas gebildete Gasbläschen hat in der Flüssigkeit zunächst einmal einen Innendruck, der dem Druck des eingeleiteten Gases entspricht. Auf der Außenwand dieses Gasbläschens lastet dabei der von der Eintauchtiefe abhängige hydrostatische Flüssigkeitsdruck, der natürlich erheblich geringer ist als der Innendruck des Gasbläschens. Folglich dehnt sich dieses wie ein Luftballon aus - und zwar so lange, bis der Innendruck des Gasbläschens gleich dem hydrostatischen Außendruck ist, den die Flüssigkeit auf die Bläschenwand ausübt. Bei diesem Vorgang vergrößert sich das Volumen des Gasbläschens um ein Vielfaches, wobei gleichzeitig sein Auftrieb entsprechend dem Gewicht des verdrängten Flüssigkeitsvolumens ständig ansteigt. Hieraus folgt, daß je stärker komprimiert das eingeleitete Gas ist, desto größere Bläschen mit umso stärkerem Auftrieb gebildet werden, die die Flüssigkeit so schnell wieder verlassen, daß es zu einem wirksamen Stoffaustausch zwischen Gas- und Flüssigkeitsphase garnicht kommen kann. Dazu ist die Verweilzeit des Gasbläschens in der Flüssigkeit viel zu kurz. An diesem grundsätzlichen Mangel leiden alle konventionellen Verfahren, die durch die Anwendung von komprimierten, unter Druck stehenden Gasen eine rasche Sättigung der Flüssigkeit mit einem Gas anstreben.

Der vorliegenden Erfindung liegt nun die Erkenntnis zugrunde, daß sich eine für die Absorption des Gases in der Flüssigkeit ausreichende Verweilzeit nur erreichen läßt, wenn das frisch gebildete Gasbläschen etwa den gleichen Innendruck hat wie der von außen auf dem Bläschen lastende hydrostatische Druck. Dann schwebt das Gasbläschen ohne Volumenvergrößerung und ohne Erhöhung seines Auftriebs so lange in der Flüssigkeit, bis die von der jeweiligen Temperatur und der Natur der Flüssigkeit abhängige Sättigungskonzentration für das eingeleitete Gas erreicht ist.

Es stellte sich deshalb die Aufgabe, ein Verfahren und eine Vorrichtung zu finden, die es ermöglichen, ein Gas wie Luft oder Sauerstoff unter Anwendung eines möglichst geringen Druckes in einer Flüssigkeit wie Wasser in Form von Gasbläschen zu verteilen und zu suspendieren, so daß diese ohne oder mit nur geringem Auftrieb genügend lange in der Flüssigkeit schweben, um die Sättigungskonzentration der Flüssigkeit für das Gas zu erreichen.

Gelöst wird diese Aufgabe durch ein Verfahren zum Einleiten eines Gases in eine Flüssigkeit, bei dem ein unter Atmosphärendruck stehendes Gas durch ein über die Flüssigkeitsoberfläche hinausragendes Saugrohr mittels einer unter der Flüssigkeitsoberfläche aufgestellten, luftfördernden Turbine angesaugt und unter Anwendung eines Druckes, der im Gleichgewicht mit oder nur geringfügig höher als der hydrostatische Druck an der Grenzfläche Gas/Flüssigkeit ist, durch die Turbine rotierend in der Flüssigkeit verteilt wird.

Bei diesem Verfahren wird die Umdrehungsgeschwindigkeit der Turbine so eingestellt, daß das angesaugte Gas unter einem Druck steht, der gerade ausreicht, um das Eindringen der Flüssigkeit von außen in die Turbine zu verhindern und eine Absorption des Gases in der Flüssigkeit zu ermöglichen. Die dabei von der Turbine in die Flüssigkeit abgegebenen Gasbläschen haben von Anfang an einen Innendruck der gleich dem hydrostatischen Außendruck der sie umgebenden Flüssigkeit ist. Sie schweben deshalb in der Flüssigkeit oder steigen allenfalls ganz langsam an die Flüssigkeitsoberfläche, wodurch genügend Zeit für eine Absorption des eingeleiteten Gases bis zur Sättigungkonzentration in der Flüssigkeit besteht.

Bei diesem Verfahren können reiner Sauerstoff, Luft, aber auch beliebige andere Gase und sogar Abgase eingesetzt werden, bei denen der intensive Kontakt mit der Flüssigkeit die Reinigung von Schwebstoffen, Geruchsstoffen und anderen Verunreinigungen ermöglicht. So kann nach diesem Verfahren z.B. auch Rauchgas gereinigt werden, indem es in eine Flüssigkeit eingeleitet wird, die das Gas absorbiert und die im Gas enthaltenen Rauchpartikel benetzt, löst oder sedimentiert. Falls in dem Gas wertvolle Stäube enthalten sind, können sie so gesammelt und wiedergewonnen werden.

Hauptanwendungsgebiet des erfindungsgemäßen Verfahrens ist aber die Einleitung und Absorption von Luftsauerstoff in Abwässern, um deren biologische Regeneration zu ermöglichen. Durch die Saugwirkung der Flügel des Rotors kann das Gas oder der Luftsauerstoff durch ein Saugrohr bis in große Gewässertiefen geleitet werden. Durch die Rotation der Flügel wird das Gas unter dem geringst möglichen Druck- und Energieaufwand in Form feiner Bläschen an die Flüssigkeit abgegeben, deren Innendruck gleich dem hydrostatischen Außendruck der Flüssigkeit ist.

Bei konventionellen Belüftungsverfahren von Flüssigkeiten hängt die erreichte Übertragungsleistung des eingeleiteten Gases auf die Flüssigkeit in hohem Maße von der Becken- oder Gewässertiefe ab. Je tiefer unter der Wasseroberfläche die Bildung der Gasbläschen erfolgt, desto länger ist die Wegstrecke, die das aufsteigende Gasbläschen bis zur Wasseroberfläche zurückzulegen hat und desto bessere Aussichten bestehen, möglichst große Mengen des eingeleiteten Gases in der Flüssigkeit zu absorbieren. Diese Überlegungen treffen zwar auch für das erfindungsgemäße Belüftungsverfahren zu, jedoch ist hier die Einleitungstiefe des Gases für die erreichte Sättigungskonzentration der Flüssigkeit mit dem Gas bei weitem nicht von so großer Bedeutung, weil auch bei geringerer Wassertiefe das gebildete Gasbläschen wegen seiner geringen Auftauchgeschwindigkeit genügend lange in der flüssigen Phase verbleibt, um die Absorption des Gases in der Flüssigkeit bis zur Sättigungskonzentration zu erreichen.

Zur Durchführung des erfindungsgemäßen Verfahrens wurde nun ein Belüfter zum Einleiten von Gasen in Flüssigkeiten entwickelt, der ein oder mehrere aus der Flüssigkeitsoberfläche herausragende Saugrohre aufweist, die senkrecht auf einer luftfördernden Turbine angeordnet und auf einem auf dem Boden des Beckens, Teiches oder sonstigen Gewässers stehenden Gestells befestigt sind.
- In Fig. 1: ist der erfindungsgemäße Belüfter dargestellt.
- Fig. 2: zeigt den inneren Aufbau der Turbine.
- Fig. 3: zeigt die Turbine mit innerem und äußerem Laufrad von oben betrachtet.
- Fig. 4: zeigt eine Seitenansicht der Doppelturbine
- Fig. 5: zeigt den Belüfter mit aufgesetztem Rohrkrümmer 15

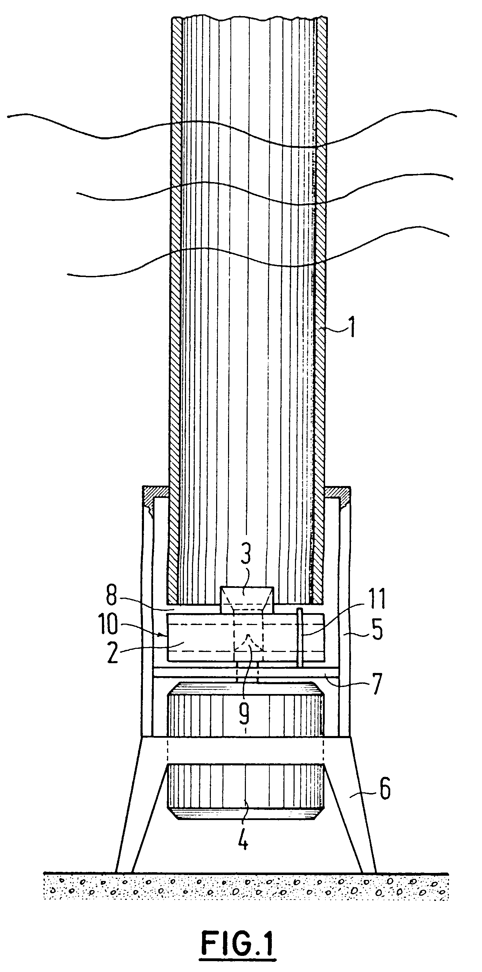

Fig. 1 zeigt einen erfindungsgemäßen Belüfter, mit einem Saugrohr 1 und einer luftfördernden Turbine 2. Die Turbine 2 wird durch einen durch ein Standgestell 6 gehaltenen Tauchmotor 4 angetrieben. Auf dem Standgestell 6 ist ein Montageteil 5 befestigt, das eine Montageplattform 7 für Bremsbleche 11 trägt, die Wirbelbildungen des aus der Turbine 2 austretenden Wassers verhindern. Die durch das Saugrohr 1 über den Lufteinlaß 3 und den Einlaufkegel 9 in die Turbine 2 eintretende Luft wird über die Turbinenkanäle bis zur Grenzfläche Gas/Flüssigkeit 10 gefördert und tritt dort in Form von feinen Gasbläschen in die flüssige Phase über. Zwischen dem Saugrohr 1 und der rotierenden Turbine 2 befindet sich ein mehrere Millimeter breiter offener Spalt 8, der die ungehinderte Drehung der Turbine ermöglicht. Flüssigkeit kann durch den offenen Spalt 8 nicht eindringen, da die von der rotierenden Turbine ausgehenden Zentrifugalkräfte die Flüssigkeit sofort wieder herausschleudern würden.

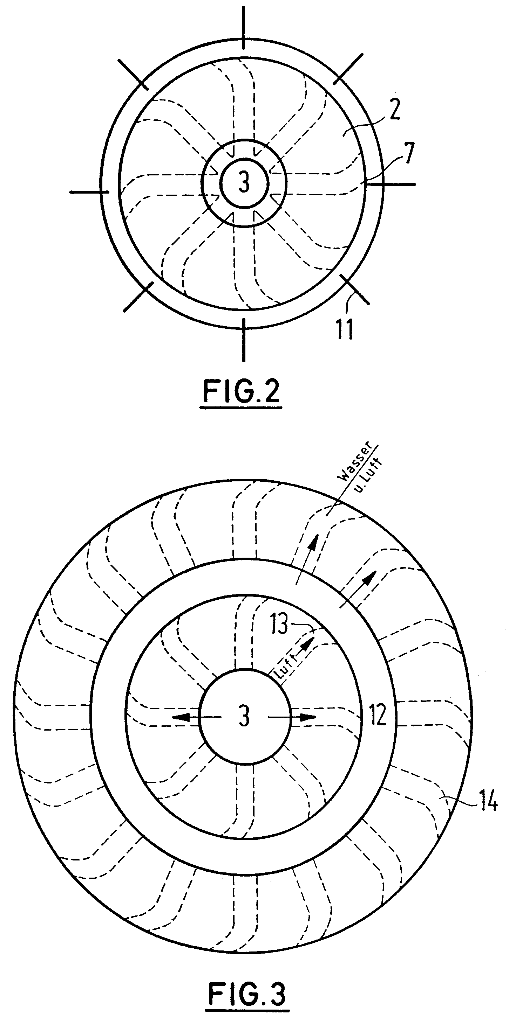

Fig. 2 zeigt in Draufsicht von oben den inneren Aufbau der luftfördernden Turbine 2. Über den zentralen Lufteinlaß 3 kann die angesaugte Luft über die Turbinenkanäle zur Grenzfläche Gas/Flüssigkeit gefördert werden. Die Montageplattform 7 und die Bremsbleche 11 sind ebenfalls angedeutet.

Fig. 3 zeigt in Draufsicht eine besonders vorteilhafte Ausgestaltung der luftfördernden Turbine bestehend aus einem inneren Laufrad 13, das durch den Zwischenraum 12 vom äußeren Laufrad 14 abgetrennt ist. Inneres und äußeres Laufrad sind lösbar miteinander verbunden, können also entweder mit gleicher Geschwindigkeit laufen, können aber auch voneinander getrennt sein und dann mit unterschiedlichen Umlaufgeschwindigkeiten arbeiten.

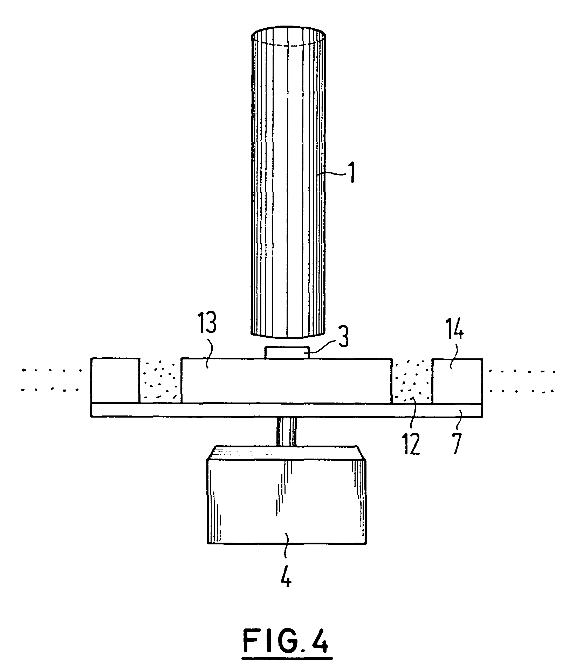

Der besondere Vorteil der mit einem inneren 13 und äußeren Laufrad 14 ausgestatteten Doppelturbine wird durch Fig. 4 verdeutlicht. Die aus dem inneren Laufrad 13 austretenden Gasbläschen werden zusammen mit von oben nachströmender Flüssigkeit sofort vom äußeren Laufrad 14 aus dem Zwischenraum 12 abgesaugt und ohne Druckanwendung in einem weiten Bereich der Flüssigkeit verteilt. Durch die Rotation des äußeren Laufrades 14 entsteht an der Grenzfläche Gas/Flüssigkeit so eine Sogwirkung, die den Übertritt der Gasbläschen in die flüssige Phase erheblich erleichtert.

Wird ein derartiger erfindungsgemäßer Belüfter nun z.B. in ein mehrere Meter tiefes Wasserbecken eingesetzt, dann ragt in der Regel nur das oder die Saugrohre 1 über die Wasseroberfläche hinaus. Allerdings braucht der Belüfter nicht unbedingt mit einem Unterwassermotor zu arbeiten. Die Turbine kann auch über eine Kardanwelle durch einen über der Wasseroberfläche angebrachten Motor angetrieben werden. Das kann von Vorteil sein, wenn an dem Motor häufig Wartungsarbeiten durchgeführt werden müssen, die bei einem über der Wasseroberfläche angebrachten und damit leichter zugänglichen Motor einfacher angegangen werden können. Zu Beginn der Belüftung ist das Saugrohr 1 bis zur Wasseroberfläche mit Wasser gefüllt. Sobald nun die Turbine 2 zu arbeiten beginnt, transportiert sie zunächst das im Saugrohr und in der Turbine befindliche Wasser in die umgebende Flüssigkeit. In das jetzt entleerte Saugrohr 1 strömt von oben Luft nach, die von der Turbine 2 über den Lufteinlaß 3 an die Grenzfläche Gas/Flüssigkeit 10 gefördert wird. Die Umdrehungsgeschwindigkeit der Turbine 2 wird dabei so eingestellt, daß ein Rückfluß von Wasser in die entleerten Turbinenkanäle und das Saugrohr 1 verhindert und ein zum Übertritt der Luftbläschen in die umgebende Flüssigkeitsphase erforderlicher minimaler Überdruck entsteht. Höhere Umdrehungsgeschwindigkeiten, mit denen das Gas oder die Luft nach Art eines Ventilators in die Flüssigkeit hineingewirbelt wird, müssen vermieden werden, weil dadurch das Gas unter Druck in die Flüssigkeit hineingepreßt würde mit der Folge, daß sich rasch große Gasblasen mit starkem Auftrieb bilden und das Gas dann die Flüssigkeit sehr schnell wieder verlassen würde.

In das Saugrohr 1 kann anstelle von Luft auch heißes Gas oder gekühltes Gas eingeleitet werden, um damit die Temperatur der Flüssigkeit zu erhöhen oder abzusenken.

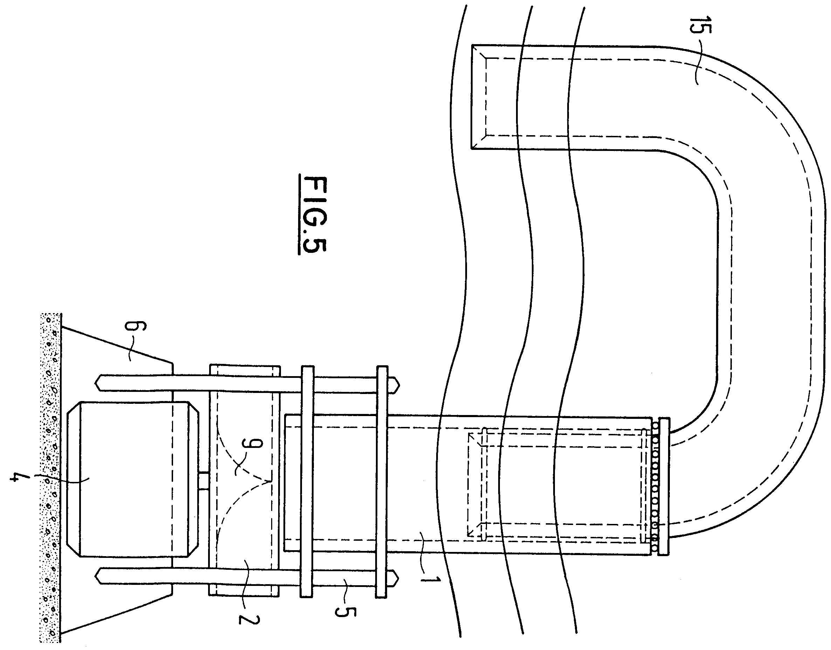

Eine besondere Variante des erfindungsgemäßen Belüfters zeigt Fig. 5. Sie besteht darin, daß auf das Saugrohr 1 ein in die Flüssigkeit wieder eintauchender Rohrkrümmer 15 aufgesetzt wird, durch den die Flüssigkeit über das Saugrohr in die Turbine geleitet und somit eine rasche Umwälzung des Wassers in dem Becken, Teich oder sonstigen Gewässer erreicht werden kann.

Der erfindungsgemäße Belüfter arbeitet äußerst energiesparend. Abgesehen von der anfänglichen Entleerung des wassergefüllten Saugrohres und abgesehen auch von dem Sonderfall, bei dem der Belüfter durch einen auf das Saugrohr aufgesetzten Rohrkrümmer 15 als Flüssigkeitsumwälzanlage gebraucht wird, wird durch die Turbine im wesentlichen nur Gas gefördert und dabei nur eine äußerst geringe Pumpleistung vollbracht. Hinzu kommt, daß die Turbine nur mit einer geringen Geschwindigkeit arbeitet, die nur gerade so groß ist, daß ein ausreichender Gegendruck erzeugt wird, um ein Eindringen der Flüssigkeit von außen in die Turbine zu verhindern. Der Energieverbrauch des erfindungsgemäßen Belüfters wird weiterhin auch noch dadurch verringert, daß die durch das Saugrohr von oben nachströmende Luft durch den Lufteinlaß 3 auf die Turbine 2 trifft und damit die Drehbewegung der Turbine noch unterstützt.

### Bezugszeichenliste

- 1: Saugrohr
- 2: Turbine
- 3: Lufteinlaß
- 4: Tauchmotor
- 5: Montageteil
- 6: Standgestell
- 7: Montageplattform
- 8: offener Spalt
- 9: Einlaufkegel für Luftzuführung
- 10: Grenzfläche Gas/Flüssigkeit
- 11: Bremsbleche
- 12: Zwischenraum zwischen äußerem und innerem Laufrad der Doppelturbine
- 13: Inneres Laufrad der Turbine
- 14: Äußeres Laufrad der Turbine
- 15: Rohrkrümmer

## Patentansprüche

1. Verfahren zum Einleiten eines Gases in eine Flüssigkeit, **dadurch gekennzeichnet**, daß ein unter Atmosphärendruck stehendes Gas durch ein über die Flüssigkeitsoberfläche hinausragendes Saugrohr (1) mittels einer unter der Flüssigkeitsoberfläche aufgestellten, luftfördernden Turbine (2) angesaugt und unter Anwendung eines Druckes, der im Gleichgewicht mit oder nur geringfügig höher als der hydrostatische Druck an der Grenzfläche Gas/Flüssigkeit (10) ist, durch die Turbine (2) rotierend in der Flüssigkeit verteilt wird.

2. Verfahren nach Anspruch 1, **dadurch gekennzeichnet**, daß die Umdrehungsgeschwindigkeit der Turbine (2) so eingestellt wird, daß an der Grenzfläche Gas/Flüssigkeit (10) das von der Turbine geförderte Gas den gleichen oder einen geringfügig höheren Druck als der dort herrschende hydrostatische Druck hat.

3. Verfahren nach Anspruch 1 oder 2, **dadurch gekennzeichnet**, daß die an der Grenzfläche Gas/Flüssigkeit (10) durch die Turbine (2) gebildeten Gasbläschen einen so geringen Auftrieb haben, daß das Gas durch Absorption bis an die Sättigungskonzentration heran von der Flüssigkeit aufgenommen wird.

4. Vorrichtung zur Belüftung von Flüssigkeiten, bestehend aus einem oder mehreren über die Flüssigkeitsoberfläche hinausragenden Saugrohren (1), die über einen Lufteinlaß (3) mit einer unter der Flüssigkeitsoberfläche aufgestellten, luftfördernden Turbine (2) verbunden ist zum Transport von Wasser und/oder Gasen über die Grenzfläche Gas/Flüssigkeit (10) in die umgebende Flüssigkeit.

5. Vorrichtung nach Anspruch 4, **dadurch gekennzeichnet**, daß die Turbine (2) ein inneres Laufrad (13) und ein äußeres Laufrad (14) aufweist zwischen denen sich ein nach oben offener Zwischenraum (12) befindet.

6. Vorrichtung nach Anspruch 5, **dadurch gekennzeichnet**, daß das innere Laufrad (13) und das äußere Laufrad (14) lösbar miteinander verbunden sind.

7. Vorrichtung nach Anspruch 4, **dadurch gekennzeichnet**, daß auf das Saugrohr (1) ein in die Flüssigkeit eintauchender Rohrkrümmer (15) aufgesetzt ist, der drehbar gelagert sein kann.

8. Vorrichtung nach Anspruch 4, **dadurch gekennzeichnet**, daß das Saugrohr (1) aus Glas, einem starren thermoplastischen Kunststoff oder einem flexiblen Schlauchmaterial besteht.
